(19) Europäisches Patentamt
European Patent Office
Office européen des brevets

(11) EP 0 553 655 B1

# (12) EUROPÄISCHE PATENTSCHRIFT

(45) Veröffentlichungstag und Bekanntmachung des Hinweises auf die Patenterteilung:
**19.06.1996 Patentblatt 1996/25**

(51) Int Cl.6: **C08F 8/34**

(21) Anmeldenummer: **93100506.0**

(22) Anmeldetag: **15.01.1993**

## (54) Polyacrylsäureester mit Ethersulfonatgruppen

Polymers of acrylic esters containing ether sulphonate groups

Polymères d'esters acryliques contenant des groupes éther-sulfonate

(84) Benannte Vertragsstaaten:
**BE DE FR GB NL**

(30) Priorität: **28.01.1992 DE 4202187**

(43) Veröffentlichungstag der Anmeldung:
**04.08.1993 Patentblatt 1993/31**

(73) Patentinhaber: **Th. Goldschmidt AG**
**D-45127 Essen (DE)**

(72) Erfinder:
- **Esselborn, Eberhard**
**W-4300 Essen 1 (DE)**
- **Fock, Jürgen, Dr.**
**W-4000 Düsseldorf 30 (DE)**
- **Hahn, Günter, Dr.**
**W-4330 Mülheim/Ruhr (DE)**

(56) Entgegenhaltungen:
**EP-A- 0 386 507**
**US-A- 4 403 071**
**US-A- 4 430 481**
**US-A- 4 430 482**

- **PATENT ABSTRACTS OF JAPAN vol. 12, no. 316 (C-524)(3163) 26. August 1988 JP-A-63 084 641**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 553 655 B1

Printed by Jouve, 75001 PARIS (FR)

## Beschreibung

Die Erfindung betrifft Polyacrylsäureester mit Ethersulfonatgruppen und ein Verfahren zu ihrer Herstellung. Die Erfindung betrifft ferner die Verwendung der erfindungsgemäßen Polyacrylsäureester mit Ethersulfonatgruppen als Dispergiermittel, Verdickungsmittel, Antistatikum und als Mittel zur Verbesserung des Trocknungswiderstandes von wäßrigen Tinten.

Verfahren zur Herstellung von Polyacrylsäureestern mit unterschiedlichen Estergruppen durch Umesterung von Polyacrylsäurealkylestern mit dem oder den entsprechenden unterschiedlichen Alkoholen sind in den deutschen Offenlegungsschriften 39 06 702, 40 06 093, 40 08 761 und den deutschen Patentschriften 38 42 201, 38 42 202 beschrieben. Diese Umesterungsverfahren haben gegenüber dem bisher geübten Verfahren der Copolymerisation der jeweiligen monomeren Acrylsäureester mit unterschiedlichen Estergruppen den Vorteil der gleichmäßigen Verteilung der unterschiedlichen Estergruppen längs der Kette des polymeren Moleküls und der weitgehenden Freiheit von monomeren und/oder niedrigmolekularen Produkten. Ferner können zur Umesterung auch ungesättigte Alkohole eingesetzt werden, die bei einer radikalischen Polymerisation zumindest anteilig in die Polymerisationsreaktion einbezogen würden.

In der US-PS 4 403 071 werden Copolymere von Acrylamiden und Vinylsulfonsäuren oder deren Salzen beschrieben, die als Schleppflüssigkeiten bei der Erdölgewinnung dienen. Die Schleppflüssigkeit kann ein sulfatisiertes oder sulfoniertes, ethoxyliertes Acrylsäurepolymer enthalten.

Es wurde nun gefunden, daß bestimmte Umesterungsprodukte von durch radikalische Polymerisation erhaltenen Acrylsäurealkylestern sich durch besondere tensidische Eigenschaften auszeichnen und insbesondere hervorragende Dispergiermittel sind.

Dabei sind diese dispergierenden Eigenschaften in unterschiedlichen Systemen zu finden, wie etwa bei der Verbesserung der Dispergierbarkeit von Pigmenten, wie etwa Kreide, in härtbaren Polyesterharzen oder von Zement in Beton.

Die Erfindung betrifft in einem ersten Aspekt als neue Verbindungen Polyacrylsäureester mit Ethersulfonatgruppen, erhältlich durch Umesterung von durch radikalische Polymerisation erhaltenen Polyacrylsäurealkylestern, deren Alkylgruppen 1 bis 8 Kohlenstoffatome aufweisen, mit einem Gemisch, bestehend aus

a) 10 bis 100 Mol-% Ethersulfonaten der allgemeinen Formel

$$H-(OCH_2\underset{\underset{R^1}{|}}{CH}-)_nO-(CH_2)_p-SO_3M \qquad I$$

und

b) 0 bis 90 Mol-% Ethern der allgemeinen Formel

$$H-(OCH_2\underset{\underset{R^2}{|}}{CH}-)_mO-R_3 \qquad II$$

wobei

$R^1$ und $R^2$ jeweils ein Wasserstoff-, Methyl- oder Ethylrest ist,
$R^3$ ein Alkyl- oder Alkenylrest mit bis zu 30 Kohlenstoffatomen oder ein Alkylphenylrest, dessen Alkylgruppe bis zu 30 Kohlenstoffatome aufweist, ist,
M Natrium ist,
n und m im durchschnittlichen Molekül jeweils einen Wert von 1 bis 200 haben und
p 2, 3 oder 4 ist,

in solchen Mengen, daß 10 bis 70 % der Estergruppen umgesetzt werden, in Gegenwart eines an sich bekannten Umesterungskatalysators bei Temperaturen von 70 bis 160 °C, gegebenenfalls in Gegenwart eines Lösungsmittels.

Vorzugsweise sind die Reste $R^1$ und $R^2$ Wasserstoff- oder Methylreste, wobei für den Fall, daß n und/oder m > 1 ist, innerhalb des Moleküls der Formel I und/oder II die Reste unterschiedliche Bedeutung haben können. Durch geeignete Wahl der Reste $R^1$ und/oder $R^2$ und der Indices n und/oder m kann die Hydrophilie der erfindungsgemäßen Verbindungen in gewünschtem Maße eingestellt werden: Mit steigendem Gehalt an Oxyalkyleneinheiten, deren Reste $R^1$ bzw. $R^2$ Wasserstoffreste bedeuten, steigt die Hydrophilie. Sie sinkt mit steigender Anzahl an Resten $R^1$ bzw. $R^2$,

die die Bedeutung eines Methyl- oder Ethylrestes haben.

Vorzugsweise haben die Indices n und m einen Wert von 5 bis 100.

Beispiele für Reste $R^3$ sind:

a) Alkylreste: Methyl, Ethyl-, Propyl-, Butyl-, Hexyl-, Decyl-, Dodecyl-, Hexadecyl- oder Behenylrest;
b) Alkenylreste: Allyl-, Methallyl- oder Oleylrest;
c) Alkylphenylreste: Octylphenyl-, Nonylphenyl- oder Dodecylphenylrest.

Bevorzugte Reste $R^3$ sind der Methyl-, Butyl-, Dodecyl-, Stearyl-, Oleyl-, Nonylphenyl- oder der Allylrest.

Besonders bevorzugt sind die Polyacrylsäureester, die ausschließlich mit Verbindungen der Formel I umgeestert worden sind. Bevorzugt führt man die Umsetzung mit Polyacrylsäureestern durch, bei denen bis zu 50 Mol-% der Acrylsäurealkylester durch die entsprechenden Methacrylsäurealkylester ersetzt sind.

Die Umesterung wird mit solchen Mengen der Umesterungskomponenten der Formel I und II durchgeführt, daß 10 bis 70 %, vorzugsweise 20 bis 50 % der Estergruppen umgeestert werden. Dies kann durch Bestimmung der Menge des bei der Umesterung freigesetzten Alkohols des Polyacrylsäureesters kontrolliert werden.

Die Umesterung erfolgt in Gegenwart eines Umesterungskatalysators. Derartige Katalysatoren sind dem Fachmann bekannt. Beispiele solcher Katalysatoren sind i-Propyl- oder n-Butyltitanat, Kalium- oder Natriummethylat, p-Toluolsulfonsäure, Methansulfonsäure oder Trifluoressigsäure.

Es ist meist vorteilhaft, die Umsetzung in einem Lösungsmittel durchzuführen. Bevorzugte Lösungsmittel sind Toluol oder Xylol.

Die Umesterungstemperatur beträgt etwa 70 bis 160°C, insbesondere 70 bis 150°C.

Die Erfindung betrifft in einem weiteren Aspekt die Verwendung der erfindungsgemäßen polymeren Verbindungen als Dispergiermittel, Verdikkungsmittel, Antistatikum und als Mittel zur Verbesserung des Trocknungswiderstandes von wäßrigen Tinten. Wie eingangs erwähnt, ist das Einsatzspektrum der erfindungsgemäßen Verbindungen weit gefächert.

Eine wesentliche und technisch besonders wertvolle Einsatzmöglichkeit besteht in der Verwendung der Polyacrylsäureester zur Verbesserung der Dispergierbarkeit von Pigmenten in härtbaren Polyesterharzen. Als Beispiel für solche Pigmente ist insbesondere Kreide zu nennen. Als Dispergiermittel werden hier 0,5 bis 3 Gew.-% eines erfindungsgemäßen Produktes mit seitenständigen Sulfopropylalkoxylat- und Allylalkoxylatgruppen, bezogen auf das Gemisch, bestehend aus Harz, Füllstoff und einem Härter, eingesetzt.

Durch den Zusatz der erfindungsgemäßen Verbindungen zu mit Kreide gefüllten, ungesättigten Polyesterharzen wird die Randfaserdehnung und die Kerbschlagzähigkeit verbessert.

Setzt man die erfindungsgemäßen Verbindungen Zement zu, beobachtet man eine Verbesserung der mechanischen Eigenschaften und der Beständigkeit des daraus hergestellten Betons. Darüber hinaus werden die Fließeigenschaften des Betons verbessert, ohne daß die Härtungscharakteristik beeinträchtigt wird.

Die erfindungsgemäßen Verbindungen können bei Einstellung einer entsprechend hohen Hydrophilie Tinten zugesetzt werden, deren Trocknungswiderstand bei einer Zusatzmenge von 1 bis 15 Gew.-%, bezogen auf Tinte, wesentlich erhöht wird.

Weitere Verwendungsmöglichkeiten der erfindungsgemäßen Verbindungen bestehen in der antistatischen Ausrüstung von Kunststoffen sowie in der Viskositätserhöhung von Zubereitungen, die anionische Tenside enthalten.

In den folgenden Beispielen wird die Herstellung der erfindungsgemäßen Verbindungen erläutert und deren Eigenschaften anhand anwendungstechnischer Prüfung gezeigt.

Beispiel 1 A

Herstellung von Polymethylacrylat durch radikalische Polymerisation (nicht erfindungsgemäß)

Eine Lösung von 0,6 g Azodiisobuttersäurenitril und 20,2 g Dodecylmercaptan in 50 g Toluol und 280 g (ca. 3,25 Mol) Methylacrylat wird innerhalb von 2 h in einen mit 53 g Toluol gefüllten Reaktor gegeben; das vorgelegte Lösungsmittel hat dabei eine Temperatur von 100°C und befindet sich unter einer Stickstoffatmosphäre. Danach werden nochmal 0,9 g Azodiisobuttersäurenitril, gelöst in 20 g Methylethylketon, innerhalb von 0,5 h nachgegeben. Schließlich wird das Reaktionsgemisch noch für 1 h bei der gleichbleibenden Temperatur von 100°C weiter erwärmt. Nach Beendigung der Reaktion wird das Lösungsmittel abdestilliert. Es verbleibt eine farblose, viskose Flüssigkeit mit einem Brechungsindex von 1,4802. Aus der gelchromatographischen Untersuchung ergibt sich für das erhaltene Polymerisat ein numerisches Molekulargewicht $\overline{M}_n$ von 1950 und für das Gewichtsmittel des Molekulargewichtes $\overline{M}_w$ 3330; der Uneinheitlichkeitskoeffizient beträgt demnach 1,71. Der Restmonomerengehalt beträgt 0,1 %.

Beispiele 2 A bis 6 A

Herstellung von Polymethylacrylaten unterschiedlicher Molekulargewichte durch radikalische Polymerisation (nicht erfindungsgemäß)

Es wird verfahren wie in Beispiel 1 A mit der Ausnahme, daß der Gehalt an Dodecylmercaptan variiert wird. In Tabelle 1 wird die Abhängigkeit der Zahlen- und Gewichtsmittel des Molekulargewichtes vom Gehalt an Dodecylmercaptan gezeigt.

Tabelle 1

| Polymethylacrylat aus Beispiel | Dodecylmercaptan [Gew.-%] | Molekulargewicht $\overline{M}_n$ | Molekulargewicht $\overline{M}_w$ | Uneinheitlichkeitskoeffizient |
|---|---|---|---|---|
| 1 A | 6,73 | 1 950 | 3 330 | 1,71 |
| 2 A | 20,10 | 663 | 955 | 1,44 |
| 3 A | 13,42 | 941 | 1 435 | 1,53 |
| 4 A | 2,95 | 4 453 | 11 346 | 2,55 |
| 5 A | 1,68 | 8 058 | 26 346 | 3,27 |
| 6 A | 0,43 | 16 750 | 68 500 | 4,09 |

Beispiel 7 A

Herstellung von Poly-n-butylacrylat durch radikalische Polymerisation (nicht erfindungsgemäß)

Es wird verfahren wie in Beispiel 3 A mit dem Unterschied, daß anstelle von Methylacrylat n-Butylacrylat eingesetzt wird.

Aus der gelchromatographischen Untersuchung ergibt sich für das erhaltene Polymerisat ein numerisches Molekulargewicht $\overline{M}_n$ von 910 und für das Gewichtsmittel des Molekulargewichtes $\overline{M}_w$ 1450; der Uneinheitlichkeitskoeffizient beträgt demnach 1,59. Der Restmonomerengehalt wird zu < 0,1 % ermittelt.

Beispiel 8 A

Herstellung von Poly-2-ethylhexylacrylat durch radikalische Polymerisation (nicht erfindungsgemäß)

Es wird verfahren wie in Beispiel 1 A mit dem Unterschied, daß anstelle von Methylacrylat 2-Ethylhexylacrylat eingesetzt wird.

Aus der gaschromatographischen Untersuchung ergibt sich für das erhaltene Polymerisat ein numerisches Molekulargewicht $\overline{M}_n$ von 1800 und für das Gewichtsmittel des Molekulargewichtes $\overline{M}_w$ 3030; der Uneinheitlichkeitskoeffizient beträgt demnach 1,68. Der Restmonomerengehalt wird zu ca. 0,1 % ermittelt.

Beispiel 9 A

Herstellung eines Methylacrylat-Methylmethacrylat-Copolymerisates durch radikalische Polymerisation (nicht erfindungsgemäß)

Es wird verfahren wie in Beispiel 1 A mit der Ausnahme, daß anstelle einer Menge von 280 g (ca. 3,25 Mol) Methylacrylat 140 g (ca. 1,63 Mol) Methylacrylat und 140 g (ca. 1,4 Mol) Methylmethacrylat eingesetzt werden. Aus der gelchromatographischen Untersuchung ergibt sich für das erhaltene Polymerisat ein numerisches Molekulargewicht $\overline{M}_n$ von 2280 und für das Gewichtsmittel des Molekulargewichtes $\overline{M}_w$ 4390; der Uneinheitlichkeitskoeffizient beträgt demnach 1,93. Der Restmonomerengehalt wird zu etwa 0,15 % ermittelt.

Beispiel 1 B

Herstellung eines α-Allyloxy-ω-hydroxypolyethers

116 g (ca. 2 Mol) Allylalkohol und 14,0 g (ca. 0,2 Mol) Kaliummethylat werden in einen Reaktor gegeben. Nach sorgfältiger Spülung mit Reinstickstoff wird auf 110°C geheizt und ein Gemisch von 1933 g (ca. 44 Mol) Ethylenoxid

und 578 g (ca. 10 Mol) Propylenoxid so schnell zugegeben, daß die Reaktorinnentemperatur 120°C und der Druck 6 bar nicht überschreiten. Nach vollständiger Einleitung des Alkylenoxidgemisches wird die Temperatur solange auf 115°C gehalten, bis ein gleichbleibender Druck das Ende der Nachreaktion anzeigt. Danach werden bei 80 bis 90°C die Restmonomeren im Vakuum entfernt.

Das erhaltene Produkt wird mit Hilfe von Phosphorsäure neutralisiert und das durch Destillation entstandene Natriumphosphat durch Filtration in Gegenwart eines Filterhilfsmittels entfernt. Die Hydroxylzahl des Produktes beträgt 51,0, was bei einer angenommenen Funktionalität von 1 einem Molekulargewicht von 1100 entspricht. Aus der naßanalytisch ermittelten Jodzahl (19,1) läßt sich ein Gehalt von 99,0 % der theoretisch möglichen Doppelbindungen errechnen.

<u>Beispiel 1 C</u>

Herstellung eines α-Sulfopropyl-ω-hydroxypolyethers

1328 g (ca. 1 Mol) des unter 1 B erhaltenen Polyethers werden mit 743 g Wasser, 433 g Ethanol und 0,8 g Manganacetat versetzt und mit 30 gew.-%iger Natronlauge auf einen pH-Wert von 8,1 eingestellt. Bei einer Temperatur von 25°C wird während 4 h eine Lösung von 114 g (0,6 Mol) Natriumpyrosulfit in 266 g Wasser unter gleichzeitigem Einleiten von feinverteilter Luft in Mengen von 10 l/h zugesetzt, wobei der pH-Wert durch mehrere Zugaben von 30 gew.-%iger Natronlauge in einem Bereich von 7,5 bis 8,5 gehalten wird. Nach 2 h Nachreaktion wird mit verdünnter Phosphorsäure neutralisiert und das Polyethersulfonat wie in Beispiel 1 B aufgearbeitet.

Die Hydroxylzahl des erhaltenen Produktes beträgt 47,5, was bei einer angenommenen Funktionalität von 1 einem Molekulargewicht von 1182 entspricht. Aus dem ermittelten Schwefelgehalt läßt sich ein Umsatz von 98 % und aus der Jodzahl von 95 % errechnen. Die Säurezahl beträgt 0,5.

<u>Beispiel 1 D</u>

Umesterung von Polymethylacrylat mit α-Sulfopropyl-ω-hydroxypolyether und α-Allyl-ω-hydroxypolyether

92,3 g des Polymethylacrylats aus Beispiel 1 A, gelöst in 23,1 g Toluol, werden zusammen mit 240 g (ca. 0,2 Mol) des α-Sulfopropyl-ω-hydroxypolyethers aus Beispiel 1 C und 117 g (ca. 0,2 Mol) des α-Allyl-ω-hydroxypolyethers aus Beispiel 5 B unter Stickstoff auf 120°C erhitzt und dabei das Toluol sowie mögliche Spuren von Wasser durch Destillation entfernt. Anschließend werden 450 g Diethylenglykoldimethylether zugesetzt und auf 160°C erhitzt. Danach werden für 4 h je Stunde 1,1 g Isopropyltitanat zugesetzt. Das bei der Umesterung entstehende Methanol wird durch Fraktionierung entfernt. Die Reaktion ist nach 5 h beendet; ihr Ende wird durch eine Kopftemperatur von etwa 155°C angezeigt.

Im Ansatz befinden sich noch 17 % der ursprünglich vorhandenen Polyethermonoole (ermittelt durch Bestimmung der OHZ); der Methanolgehalt im Destillat beträgt 11,0 g, entsprechend einem Umsatz von 86 %.

<u>Beispiele 2 B bis 17 B</u>

Herstellung von α-Alkyl-, α-Alkylaryl-, α-Alkenyl-ω-hydroxypolyethern unterschiedlicher Zusammensetzung

Es wird verfahren wie in Beispiel 1 B mit dem Unterschied, daß als Startalkohol ein Alkanol, ein Alkylphenol oder Methallylalkohol eingesetzt und die bei der Alkoxylierung angelagerte Menge an Alkylenoxid variiert wird und anstelle der ausschließlichen Verwendung von Ethylenoxid auch Gemische von Ethylenoxid mit Propylenoxid bzw. Butylenoxid zum Einsatz kommen. Auch werden Polyether unter alleiniger Verwendung von Propylenoxid hergestellt. In Tabelle 2 wird die Zusammensetzung verschiedener Polyether nach Art und Menge der unterschiedlichen Alkylenoxide bzw. nach der Art des ungesättigten Startalkohols angegeben. Darüber hinaus lassen sich die naßanalytisch ermittelten Hydroxylzahlen, das daraus berechnete Molekulargewicht sowie die Jodzahl aus der Tabelle entnehmen.

Tabelle 2

| Beispiel Nr. | Alkenyl-alkohol | Ethylen-oxid [Mol] | Propylen-oxid [Mol] | Butylen-oxid [Mol] | Hydroxyl-zahl | Molekular-gewicht | Jodzahl |
|---|---|---|---|---|---|---|---|
| 1 B | ALL | 21,5 | 4,0 | - | 51,0 | 1100 | 19,1 |
| 2 B | ALL | 3,5 | - | - | 233 | 241 | 100 |
| 3 B | ALL | 6,0 | - | - | 181 | 310 | 77,8 |
| 4 B | ALL | - | 6,5 | - | 138 | 405 | 62,7 |
| 5 B | ALL | 13,0 | - | - | 95,7 | 586 | 39,7 |
| 6 B | ALL | 10,7 | 2,0 | - | 90,4 | 621 | 38,3 |
| 7 B | ALL | - | 13,6 | - | 69,4 | 808 | 29,9 |
| 8 B | ALL | 17,2 | 2,3 | - | 61,6 | 910 | 25,9 |
| 9 B | ALL | 15,0 | 4,0 | - | 63,7 | 880 | 26,1 |
| 10 B | ALL | 15,1 | 7,3 | - | 51,5 | 1090 | 21,4 |
| 11 B | ALL | 1,6 | 13,6 | - | 15,7 | 3580 | 6,0 |
| 12 B | ALL | 21,1 | - | 2,3 | 55,9 | 1003 | 23,4 |
| 13 B | MALL | 12,4 | - | - | 93,8 | 598 | 39,7 |
| 14 B | MAL | 10,7 | - | - | 115,6 | 485 | - |
| 15 B | BAL | 15,0 | 4,0 | - | 60,0 | 935 | - |
| 16 B | STAL | 50,0 | - | - | 24,0 | 2340 | - |
| 17 B | NP | 13,0 | - | - | 71,0 | 790 | - |

Legende: ALL = Allylalkohol; MALL = Methallylalkohol; MAL = Methylalkohol; BAL = Butylalkohol; STAL = Stearylalkohol; NP = Nonylphenol

Beispiele 2 C bis 10 C

Herstellung von α-Sulfoalkyl-ω-hydroxypolyethern unterschiedlicher Zusammensetzung

Es wird verfahren wie in Beispiel 1 C mit dem Unterschied, daß verschiedene α-Alkenyl-ω-hydroxypolyether entsprechend den Beispielen 2 B bis 13 B durch Addition von Natriumhydrogensulfit in die entsprechenden α-Sulfoalkyl-ω-hydroxypolyether überführt werden. Tabelle 3 zeigt neben den verwendeten Polyethern die erhaltene Hydroxylzahl, das daraus berechnete Molekulargewicht, den durch Elementaranalyse ermittelten prozentualen Schwefelgehalt, den

daraus errechneten Umsatz 1, die Jodzahl und den aus letztem ermittelten Umsatz 2.

Tabelle 3

| Beispiel Nr. | α-Alkenyl-ω-hydroxy-polyether aus Beispiel Nr. | Hydroxylzahl | Molekulargewicht | Schwefelgehalt [%] | Umsatz 1 [%] | Jodzahl | Umsatz 2 [%] |
|---|---|---|---|---|---|---|---|
| 1 C | 1 B | 47,5 | 1182 | 2,20 | 98,2 | 0,94 | 95,1 |
| 2 C | 2 B | 169 | 332 | 8,74 | 95,6 | 5,8 | 94,2 |
| 3 C | 4 B | 112 | 500 | 5,98 | 93,4 | 6,1 | 90,3 |
| 4 C | 6 B | 78,8 | 712 | 4,17 | 99,1 | 1,92 | 95,0 |
| 5 C | 8 B | 55,9 | 1003 | 3,07 | 103,7 | 0,93 | 96,4 |
| 6 C | 9 B | 57,9 | 969 | 2,94 | 98,4 | 1,54 | 94,1 |
| 7 C | 10 B | 47,7 | 1176 | 2,42 | 96,6 | 2,1 | 90,3 |
| 8 C | 11 B | 15,3 | 3664 | 0,64 | 86,8 | 0,86 | 85,7 |
| 9 C | 12 B | 51,5 | 1089 | 2,56 | 94,3 | 2,3 | 90,1 |
| 10 C | 13 B | 81,0 | 693 | 4,19 | 97,0 | 2,2 | 94,5 |

Beispiele 2 D bis 22 D

Umesterungen von verschiedenen Polyacrylaten mit verschiedenen α-Sulfoalkyl-ω-hydroxypolyethern bzw. α-Alkenyl-ω-hydroxypolyethern

Es wird verfahren wie in Beispiel 1 D mit der Ausnahme, daß Polyacrylate unterschiedlichen Molekulargewichtes und unterschiedlicher Kohlenstoffzahl sowie in einem Fall ein Methylacrylat-Methylmethacrylat-Copolymerisat als estergruppenhaltige Komponente zum Einsatz kommen. Weiterhin werden unterschiedliche α-Sulfoalkyl-ω-hydroxypolyether bzw. α-Alkenyl-ω-hydroxypolyether eingesetzt, die sich in bezug auf die Kohlenstoffzahl des Alkyl- bzw. Alkenylrestes, auf das Molekulargewicht des Polyethersegmentes und dessen Zusammensetzung unterscheiden. Als Substitutionsgrad der Theorie wird der Quotient aus der Zahl der substituierten Estergruppen und der Zahl der ursprünglich vorhandenen Estergruppen bezeichnet. Der Substitutionsgrad der Praxis ergibt sich aus dem Methanolgehalt im Destillat bzw. aus der Hydroxylzahl, die aus der Konzentration der unumgesetzten Monoole ermittelt wird. Art und Menge der Komponenten sowie theoretischer und praktischer Substitutionsgrad werden in Tabelle 4 angegeben.

Tabelle 4

| Beispiel | Polyacrylat | | α-Alkenyl-ω-hydroxypolyether | | α-Sulfoalkyl-ω-hydroxypolyether | | Substitutionsgrad | |
|---|---|---|---|---|---|---|---|---|
| Nr. | Beispiel Nr. | Menge [g] | Beispiel Nr. | Menge [Mol] | Beispiel Nr. | Menge [Mol] | theoret. [Mol-%] | prakt. [Mol-%] |
| 1 D | 1 A | 92,3 | 5 B | 0,2 | 6 C | 0,2 | 40,0 | 33,8 |
| 2 D | 3 A | 99,5 | 2 B | 0,2 | 1 C | 0,2 | 40,0 | 32,6 |
| 3 D | 3 A | 99,5 | 3 B | 0,2 | 1 C | 0,2 | 40,0 | 35,0 |
| 4 D | 3 A | 92,3 | 5 B | 0,1 | 1 C | 0,3 | 40,0 | 34,2 |
| 5 D | 3 A | 99,5 | - | - | 1 C | 0,35 | 35,0 | 33,4 |
| 6 D | 1 A | 92,3 | 1 B | 0,2 | 1 C | 0,2 | 40,0 | 36,3 |
| 7 D | 1 A | 92,3 | 4 B | 0,2 | 2 C | 0,2 | 40,0 | 32,7 |
| 8 D | 1 A | 92,3 | 5 B | 0,2 | 3 C | 0,2 | 40,0 | 34,0 |
| 9 D | 1 A | 92,3 | 5 B | 0,2 | 4 C | 0,2 | 50,0 | 43,7 |
| 10 D | 1 A | 92,3 | 5 B | 0,2 | 5 C | 0,2 | 40,0 | 34,4 |
| 11 D | 1 A | 92,3 | 5 B | 0,3 | 6 C | 0,2 | 50,0 | 41,2 |

Tabelle 4 - Fortsetzung

| Beispiel Nr. | Polyacrylat Beispiel Nr. | Polyacrylat Menge [ g ] | α-Alkenyl-ω-hydroxypolyether Beispiel Nr. | α-Alkenyl-ω-hydroxypolyether Menge [ Mol ] | α-Sulfoalkyl-ω-hydroxypolyether Beispiel Nr. | α-Sulfoalkyl-ω-hydroxypolyether Menge [ Mol ] | Substitutionsgrad theoret. [ Mol-% ] | Substitutionsgrad prakt. [ Mol-% ] |
|---|---|---|---|---|---|---|---|---|
| 12 D | 1 A | 92,3 | 5 B | 0,2 | 7 C | 0,2 | 40,0 | 36,1 |
| 13 D | 1 A | 92,3 | 1 B | 0,2 | 9 C | 0,2 | 40,0 | 33,6 |
| 14 D | 1 A | 92,3 | 9 B | 0,2 | 1 C | 0,2 | 40,0 | 36,9 |
| 15 D | 1 A | 92,3 | 11 B | 0,2 | 2 C | 0,2 | 40,0 | 31,2 |
| 16 D | 4 A | 88,7 | 7 B | 0,2 | 1 C | 0,2 | 40,0 | 33,7 |
| 17 D | 4 A | 88,7 | - | - | 8 C | 0,35 | 35,0 | 27,8 |
| 18 D | 6 A | 86,7 | - | - | 8 C | 0,35 | 35,0 | 26,6 |
| 19 D | 7 A | 148,2 | 6 B | 0,3 | 6 C | 0,1 | 40,0 | 34,2 |
| 20 D | 8 A | 197,3 | 6 B | 0,3 | 6 C | 0,1 | 40,0 | 37,2 |
| 21 D | 1 A | 92,3 | 6 B | 0,2 | 9 C | 0,2 | 40,0 | 35,8 |
| 22 D | 1 A | 92,3 | 6 B | 0,30 | 10 C | 0,35 | 65,0 | 48,9 |

Beispiele 23 D bis 32 D

Es wird verfahren wie in Beispiel 1 D mit der Ausnahme, daß α-Alkyl-bzw. α-Alkylaryl-ω-hydroxypolyether und in einem Fall ein Alkanol eingesetzt werden, die sich in bezug auf die Zahl der Kohlenstoffatome im Alkylrest und das Molekulargewicht des Polyethersegmentes und dessen Zusammensetzung unterscheiden. Als Substitutionsgrad der Theorie wird der Quotient aus der Zahl der substituierten Estergruppen und der Zahl der ursprünglch vorhandenen Estergruppen bezeichnet. Der Substitutionsgrad der Praxis ergibt sich aus dem Methanolgehalt im Destillat bzw. aus

der Hydroxylzahl, die aus der Konzentration der unumgesetzten Monoole ermittelt wird. Art und Menge der Komponenten sowie theoretischer und praktischer Substitutionsgrad werden in Tabelle 5 angegeben.

Tabelle 5

| Beispiel | Polyacrylat | | α-Alkyl- bzw. α-Alkylaryl-ω-hydroxypolyether | | α-Sulfoalkyl-ω-hydroxypolyether | | Substitutionsgrad | |
|---|---|---|---|---|---|---|---|---|
| Nr. | Beispiel Nr. | Menge [g] | Beispiel Nr. | Menge [Mol] | Beispiel Nr. | Menge [Mol] | theoret. [Mol-%] | prakt. [Mol-%] |
| 23 D | 1 A | 92,3 | 14 B | 0,3 | 9 C | 0,2 | 50 | 41,7 |
| 24 D | 1 A | 92,3 | 15 B | 0,2 | 9 C | 0,2 | 40 | 35,2 |
| 25 D | 1 A | 92,3 | 16 B | 0,2 | 9 C | 0,2 | 40 | 33,6 |
| 26 D | 1 A | 92,3 | 17 B | 0,2 | 9 C | 0,2 | 40 | 36,3 |
| 27 D | 1 A | 92,3 | STA | 0,3 | 5 C | 0,2 | 50 | 43,8 |
| 28 D | 1 A | 92,3 | 16 B | 0,28 | 1 C | 0,03 | 31 | 28,5 |
| 29 D | 4 A | 88,7 | 16 B | 0,28 | 1 C | 0,03 | 31 | 27,3 |
| 30 D | 5 A | 87,6 | 16 B | 0,28 | 1 C | 0,03 | 31 | 26,4 |
| 31 D | 2 A | 107,9 | - | - | 1 C | 0,35 | 35,0 | 32,3 |
| 32 D | 9 A | 184,5 | 17 B | 0,3 | 7 C | 0,07 | 37,0 | 34,6 |

Legende: STA = Stearylalkohol

Anwendungstechnische Beispiele

Beispiele 1 E bis 6 E

Herstellung und Prüfung von hochgefüllten, modifizierten UP-Harz-Gießplatten

Eine Mischung von 100 Gew.-Teilen der handelsüblichen Lösung eines ungesättigten Polyesters in Styrol, im Handel erhältlich unter der Bezeichnung Palapreg® P 15, 70 Gew.-Teile Calciumcarbonat, 0,15 Gew.-Teile Methylethylketonperoxid und 2 Gew.-Teile eines erfindungsgemäßen Produktes aus Tabelle 4 werden unter Vakuum mit einem Flügelrührer vermischt. Die Mischung wird sodann in einer mit einem Trennmittel beschichteten Plattengießform vergossen und danach zunächst für 1 Stunde bei 60°C und anschließend für 10 Stunden bei 120°C ausgehärtet. Aus der auf diese Weise erhaltenen Platte werden gemäß DIN 53 452 Prüfkörper für die Ermittlung der Biegefestigkeit und der Randfaserdehnung und gemäß ISO 180 für die Ermittlung der Izod-Kerbschlagzähigkeit (Kerbform 1 A) hergestellt.

Aus der Tabelle 6 gehen die bei den Prüfungen unter Verwendung verschiedener erfindungsgemäßer Produkte erhaltenen Werte für die Biegefestigkeit, die Randfaserdehnung und die Izod-Kerbschlagzähigkeit hervor. Es ist zu ersehen, daß bei etwa gleichbleibender Biegefestigkeit die Randfaserdehnung und die Izod-Kerbschlagzähigkeit gegenüber dem unmodifizierten Material (Vergleich) verbessert werden.

Tabelle 6

| Beispiel Nr. | Modifizierungsmittel gemäß Beispiel Nr. | Biegefestigkeit [N/mm$^2$] | Randfaserdehnung [%] | Izod-Kerbschlagzähigkeit [kJ/m$^2$] |
|---|---|---|---|---|
| 1 E | 1 D | 85 | 7,5 | 1,20 |
| 2 E | 2 D | 92 | 11,0 | 1,25 |
| 3 E | 3 D | 85 | 12,0 | 1,40 |
| 4 E | 4 D | 87 | 10,5 | 1,35 |
| 5 E | 6 D | 89 | 9,0 | 1,15 |
| 6 E | 16 D | 95 | 9,5 | 1,20 |
| Vergleich | - | 90 | 4,5 | 1,00 |

Beispiel 7 E

Antistatische Ausrüstung von Polymethylmethacrylat

100 Gew.-Teile Polymethylmethacrylat von einem Molekulargewicht von etwa 150 000 und 2 Gew.-Teile des Produktes aus Beispiel 24 D werden in einem 1-Schnecken-Extruder bei 200°C bei einem Druck von 4 kp/cm$^2$ vermischt. Das nach dem Extrudieren erhaltene Granulat wird auf einer Spritzgußmaschine zu einer transparenten, farblosen Platte vergossen, die einen spezifischen Oberflächenwiderstand von $< 10^{10}\ \Omega\ .\ cm^{-1}$ bei 20°C und 65 % relativer Luftfeuchtigkeit aufweist; die Halbwertszeit der elektrischen Ladung ist > 2 Sekunden. Vergleichsweise zeigt ein konventionelles antistatisches Agens einen spezifischen Oberflächenwiderstand von $4\ .\ 10^{12}\ \Omega\ .\ cm^{-1}$ mit einer Halbwertszeit von > 200 Sekunden.

Beispiel 8 E

Verbesserung des Trocknungswiderstandes von wäßrigen Tinten

13 Gew.-Teile eines wasserlöslichen, schwarzen Tintenfarbstoffes, im Handel erhältlich unter der Bezeichnung "Water Black 21", 2 Gew.-Teile Nigrosin conc., 6 Gew.-Teile wäßrige Formaldehydlösung (30 %ig), 40 Gew.-Teile Ethylenglykol, 20 Gew.-Teile des Produktes aus Beispiel 27 D und 123 Gew.-Teile Wasser werden vermischt und ergeben eine wäßrige Tintenformulierung. Der Trocknungswiderstand dieser Formulierung ist größer als 25 Tage, verglichen mit 5 Tagen bei einer Tinte, die anstelle des erfindungsgemäßen Produktes 20 Gew.-Teile Harnstoff enthält.

Beispiele 9 E bis 11 E

Herstellung und Prüfung von anionischen Verdickungsmitteln

15 Gew.-Teile eines anionischen Tensids werden zusammen mit 3 Gew.-Teilen eines erfindungsgemäßen Produktes aus Tabelle 5 in 82 Gew.-Teilen deionisiertem Wasser gelöst. In der Tabelle 7 sind die mit einem Brookfield-Viskosimeter (Spindel LV 3) bei 3 Upm bei 23°C gemessenen Viskositäten angegeben, wobei als anionisches Tensid Natriumdodecylethersulfat bzw. Magnesiumdodecylsulfat eingesetzt wird.

Tabelle 7

| Beispiel Nr. | Produkt aus Beispiel Nr. | Viskosität 1) [mPa. s] | Viskosität 2) [mPa.s] |
|---|---|---|---|
| 9 E | 28 D | $1{,}35 \cdot 10^5$ | 900 |
| 10 E | 29 D | $1{,}75 \cdot 10^5$ | 1950 |
| 11 E | 30 D | $8{,}20 \cdot 10^5$ | 5000 |
| Vergleichsbeispiel | Produkt des Standes der Technik | $1{,}00 \cdot 10^5$ | 200 |

1) Natriumdodecylethersulfat

2) Magnesiumdodecylsulfat

Die Tabelle 7 zeigt die überlegene anwendungstechnische Wirkung der erfindungsgemäßen Produkte; vor allem ist die verdickende Wirkung in Magnesiumdodecylsulfat enthaltenden Mischungen hervorzuheben.

## Patentansprüche

1. Polyacrylsäureester mit Ethersulfonatgruppen, erhältlich durch Umesterung von durch radikalische Polymerisation erhaltenen Polyacrylsäurealkylestern, deren Alkylgruppen 1 bis 8 Kohlenstoffatome aufweisen, mit einem Gemisch, bestehend aus

   a) 10 bis 100 Mol-% Ethersulfonaten der allgemeinen Formel

   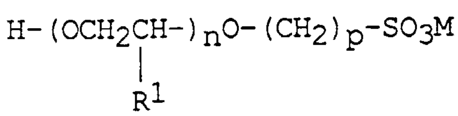 I

   und

   b) 0 bis 90 Mol-% Ethern der allgemeinen Formel

   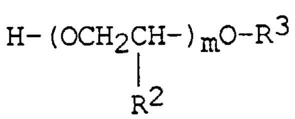 II

   wobei

   $R^1$ und $R^2$ jeweils ein Wasserstoff-, Methyl- oder Ethylrest ist,
   $R^3$ ein Alkyl- oder Alkenylrest mit bis zu 30 Kohlenstoffatomen oder ein Alkylphenylrest, dessen Alkylgruppe bis zu 30 Kohlenstoffatome aufweist, ist,
   M Natrium ist,
   n und m im durchschnittlichen Molekül jeweils einen Wert von 1 bis 200 haben und
   p 2, 3 oder 4 ist,

   in solchen Mengen, daß 10 bis 70 % der Estergruppen umgesetzt werden, in Gegenwart eines an sich bekannten Umesterungskatalysators bei Temperaturen von 70 bis 160 °C, gegebenenfalls in Gegenwart eines Lösungsmittels.

2. Polyacrylsäureester nach Anspruch 1, dadurch gekennzeichnet, daß die Indices n und m im durchschnittlichen Molekül einen Wert von 5 bis 100 haben.

**3.** Polyacrylsäureester nach Anspruch 1 oder 2, erhältlich durch Umesterung ausschließlich mit Ethersulfonaten der Formel I.

**4.** Polyacrylsäureester nach einem oder mehreren der vorhergehenden Ansprüche, dadurch gekennzeichnet, daß man die Umsetzung mit Polyacrylsäurealkylestern durchführt, bei denen bis zu 50 Mol-% der Acrylsäurealkylester durch die entsprechenden Methacrylsäurealkylester ersetzt sind.

**5.** Verwendung der Polyacrylsäureester nach einem oder mehreren der vorhergehenden Ansprüche als Dispergiermittel, Verdickungsmittel, Antistatikum und als Mittel zur Verbesserung des Trocknungswiderstandes von wäßrigen Tinten.

## Claims

**1.** Polyacrylates containing ether sulphonate groups, obtainable by transesterification of polyacrylic alkyl esters obtained by free-radical polymerization and whose alkyl groups have 1 to 8 carbon atoms with a mixture consisting of

a) from 10 to 100 mol-% of ether sulphonates of the general formula

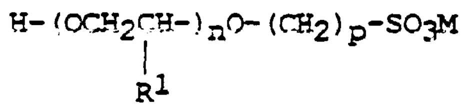 I

and

b) from 0 to 90 mol-% of ethers of the general formula

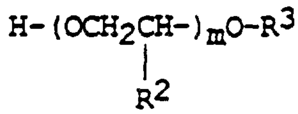 II

in which

| | |
|---|---|
| $R^1$ and $R^2$ | are in each case a hydrogen, methyl or ethyl radical, |
| $R^3$ | is an alkyl or alkenyl radical having up to 30 carbon atoms, or an alkylphenyl radical whose alkyl group has up to 30 carbon atoms, |
| M | is sodium, |
| n and m | in the average molecule each have a value of from 1 to 200, and |
| p | is 2, 3 or 4, |

in quantities such that from 10 to 70 % of the ester groups are reacted, in the presence of a transesterification catalyst which is known per se at temperatures of from 70 to 160°C, if desired in the presence of a solvent.

**2.** Polyacrylates according to Claim 1, characterized in that the indices n and m in the average molecule have a value of from 5 to 100.

**3.** Polyacrylates according to Claim 1 or 2, obtainable by transesterification exclusively with ether sulphonates of the formula I.

**4.** Polyacrylates according to one or more of the preceding claims, characterized in that the reaction is carried out with polyacrylic alkyl esters in which up to 50 mol-% of the alkyl acrylates have been replaced by the corresponding alkyl methacrylates.

**5.** Use of the polyacrylates according to one or more of the preceding claims as dispersants, thickeners, antistatic agents and as agents for ameliorating the drying resistance of aqueous inks.

## Revendications

**1.** Polyesters acryliques contenant des groupes éther-sulfonates, qu'on peut obtenir par transestérification de polyacrylates d'alkyle obtenus par polymérisation radicalaire, dont les restes alkyles contiennent de 1 à 8 atomes de carbone, avec un mélange formé de

a) 10 à 100 % en moles d'éther-sulfonates répondant à la formule générale

$$H-(OCH_2\underset{\displaystyle R^1}{\underset{|}{C}}H-)_nO-(CH_2)_p-SO_3M \qquad I$$

et

b) 0 à 90 % en moles d'éthers répondant à la formule générale

$$H-(OCH_2\underset{\displaystyle R^2}{\underset{|}{C}}H-)_mO-R^3 \qquad II$$

où

| | |
|---|---|
| $R^1$ et $R^2$ | représentent chacun un reste d'hydrogène, méthyle ou éthyle, |
| $R^3$ | représente un reste alkyle ou alkényle ayant jusqu'à 30 atomes de carbone ou un reste alkylphényle dont le groupe alkyle contient jusqu'à 30 atomes de carbone, |
| M | est le sodium, |
| n et m | ont chacun une valeur de 1 à 200 dans la molécule moyenne, et |
| p | vaut 2, 3 ou 4, |

en des quantités telles que 10 à 70 % des groupes esters subissent une réaction, en présence d'un catalyseur de transestérification connu en soi, à des températures de 70 à 160°C, éventuellement en présence d'un solvant.

**2.** Polyesters acryliques selon la revendication 1, caractérisés en ce que les indices n et m ont une valeur de 5 à 100 dans la molécule moyenne.

**3.** Polyesters acryliques selon la revendication 1 ou 2, qu'on peut obtenir par transestérification exclusivement avec des éther-sulfonates de formule I.

**4.** Polyesters acryliques selon une ou plusieurs des revendications précédentes, caractérisés en ce qu'on effectue la réaction avec des polyacrylates d'alkyle dans lesquels jusqu'à 50 % en moles des acrylates d'alkyle sont remplacés par les méthacrylates d'alkyle correspondants.

**5.** Utilisation des esters polyacryliques selon une ou plusieurs des revendications précédentes comme des agents de dispersion, des épaississants, des agents antistatiques et comme des agents pour améliorer la résistance au séchage des encres aqueuses.